# EUROPEAN PATENT APPLICATION

(11) **EP 4 617 528 A1**
(43) Date of publication of application: **17.09.2025**
(21) Application number: 23887969.6
(22) Date of filing: 06.11.2023
(51) Int. Cl.: F16H 57/04, F16H 57/021, F16H 57/00

(54) **OIL SHIELD, AND LUBRICATING STRUCTURE FOR HIGH-SPEED BEARING OF ELECTRIC DRIVE AXLE**

(30) Priority: 07.11.2022 CN 202211381629
(71) Applicant: Sinotruk Jinan Power Co., Ltd., West Jinan, Shandong 250000 (CN)
(72) Inventor: WEI, Jianglong, Jinan, Shandong 250000 (CN); KONG, Zhuo, Jinan, Shandong 250000 (CN); LAI, Li, Jinan, Shandong 250000 (CN); LIU, Hongwei, Jinan, Shandong 250000 (CN); LIU, Rongju, Jinan, Shandong 250000 (CN); HAO, Lina, Jinan, Shandong 250000 (CN)
(74) Representative: Chung, Hoi Kan
(86) International application number: PCT/CN2023/130006
(87) International publication number: WO 2024/099279

(57) **Abstract**

The present invention provides an oil shield, and a lubricating structure for high-speed bearing of electric drive axle, and belongs to the technical field of electric drive axles for heavy-duty vehicles. The oil shield includes an annular framework, where a crescent soft plate is arranged on an inner circumferential surface of the annular framework, an outer circumferential surface of the crescent soft plate is fitted to the inner circumferential surface of the annular framework, an inner circumferential surface of the crescent soft plate faces a circle center of the annular framework, a fitting lip is arranged in a middle portion of the inner circumferential surface of the crescent soft plate, and the fitting lip is arranged opposite to the circle center of the annular framework. The beneficial effect of the present invention lies in that the oil shield can improve an oil surface level of an oil sump through the design of the crescent soft plate and the design of the fitting lip, thereby ensuring that there is a sufficient amount of oil stored in the oil sump, and thus fully lubricating a high-speed bearing.

## Description

### TECHNICAL FIELD

The present invention belongs to the technical field of electric drive axles for heavy-duty vehicles, and in particular, to an oil shield, and a lubricating structure for a high-speed bearing of an electric drive axle.

### BACKGROUND

At present, since the gear ratio of the main speed reducer of the electric drive axle for the heavy-duty vehicle is large, the input rotating speed of the motor is high, and the shaft diameter of the high-speed shaft, the gear and the bearing size are small, in order to reduce the oil churning loss of the gear, the oil level line in the existing main speed reducer box is relatively low, and the position of the high-speed bearing is generally higher than that of the oil level line, causing that the problem of bearing ablation caused by insufficient lubrication is prone to occurring in the high-speed bearing. Therefore, in order to ensure that the high-speed bearing always has sufficient lubricating oil for lubrication under various operating conditions, such as starting, accelerating, decelerating, ascending and descending slopes, turning, normal driving, etc. of the electric drive axle, there is an urgent need to provide an oil shield and a high-speed bearing lubricating structure which are simple in structure, low in cost and simple in assembly.

### SUMMARY

### Technical problem

The present invention aims to provide and design an oil shield and a lubricating structure for a high-speed bearing of an electric drive axle, aiming at the problem that a high-speed bearing in an existing electric drive axle main speed reducer easily causes bearing ablation due to insufficient lubrication during operation, so as to ensure that there is sufficient lubricating oil to lubricate the high-speed bearing.

In order to achieve the above purpose, on one hand, the present invention provides an oil shield, including an annular framework, where a crescent soft plate is arranged on an inner circumferential surface of the annular framework, an outer circumferential surface of the crescent soft plate is fitted to the inner circumferential surface of the annular framework, an inner circumferential surface of the crescent soft plate faces a circle center of the annular framework, a fitting lip is arranged in a middle portion of the inner circumferential surface of the crescent soft plate, and the fitting lip is arranged opposite to the circle center of the annular framework. In this way, when the oil shield provided by the present invention is used for oil blocking treatment, an oil level surface of an oil sump can be improved through the design of the crescent soft plate and the design of the fitting lip, thereby ensuring that there is a sufficient amount of oil stored in the oil sump, and thus fully lubricating a high-speed bearing.

Further, the crescent soft plate is made of a high-temperature resistant rubber material, so as to ensure that the crescent soft plate has sufficient elasticity and heat resistance and can be used in a high-temperature environment.

Further, the annular framework and the crescent soft plate are integrally formed by vulcanization and bonding, and the annular framework and the crescent soft plate are not prone to being separated.

On the other hand, the present invention further provides a lubricating structure for a high-speed bearing of an electric drive axle, including a bearing seat, where one end of the bearing seat is sequentially provided with an oil shield mounting hole and a bearing mounting cavity from outside to inside, a step surface is arranged between the oil shield mounting hole and the bearing mounting cavity, the above oil shield is arranged in the oil shield mounting hole, and one side of the oil shield is fitted to the step surface of the oil shield mounting hole; and the bearing mounting cavity is communicated with a lubricating oil channel, a high-speed bearing is rotatably mounted in the bearing mounting cavity, a rotating assembly is rotatably connected to the high-speed bearing, the rotating assembly penetrates through the oil shield, and a lower end of the rotating assembly is fitted to a fitting lip of the oil shield. At the moment, a bearing oil sump is formed between the oil shield and the bearing mounting cavity, and a high end of the fitting lip is the highest position of the oil level of the bearing oil sump, so that the height of the bearing oil sump is effectively improved, and part of the rollers on the high-speed bearing are always immersed in the lubricating oil, thereby ensuring that the high-speed bearing is fully lubricated. Moreover, since the two sides of the crescent soft plate of the oil shield are upwarped along a horizontal line and form a certain angle, and the angle is larger than a front-back pitch angle of the rotating assembly during actual operation, it is ensured that the lubricating oil in the bearing oil sump cannot be lost due to front-back pitching of the electric drive axle during traveling of the vehicle.

Further, the rotating assembly includes a rotating shaft, an end portion of the rotating shaft is rotatably connected to the high-speed bearing, and a lower end of the rotating shaft is fitted to the fitting lip of the oil shield, thereby preventing leakage of the lubricating oil.

Further, the rotating assembly includes a rotating shaft and a gear, an end portion of the rotating shaft is rotatably connected to the high-speed bearing, the gear is fixedly connected to the rotating shaft, the gear is provided with a shaft sleeve portion, and a lower end of the shaft sleeve portion is fitted to the fitting lip of the oil shield, thereby preventing leakage of the lubricating oil.

Further, a gap exists between the oil shield and the high-speed bearing in an axial direction, so as to ensure that the crescent soft plate of the oil shield can elastically deform and rebound, and meanwhile, it is ensured that the lubricating oil can be stored between the high-speed bearing and the oil shield.

Further, the oil shield is provided with a positioning block, the bearing seat is provided with a positioning groove, and the positioning groove is matched with the positioning block to position the oil shield.

Further, a locking member and an adjusting member are arranged on one side, away from the oil shield, of the high-speed bearing, the locking member is in contact with an inner ring of the high-speed bearing, the adjusting member is in contact with an outer ring of the high-speed bearing, and the locking member and the adjusting member position the inner ring and the outer ring of the high-speed bearing respectively.

### Beneficial effects

Firstly, the oil shield and the lubricating structure for a high-speed bearing of an electric drive axle provided by the present invention can form a bearing oil sump without changing the assembly manner of the high-speed bearing and without affecting the splash lubrication of the high-speed bearing, and part of the rollers are always immersed in the lubricating oil on the high-speed bearing higher than the oil level surface in the main speed reducer box of the electric drive axle, so that the ablation problem of the high-speed bearing is avoided; and secondly, according to the present invention, it is ensured that the high-speed bearing always has sufficient lubricating oil for lubrication under various operating conditions, such as starting, accelerating, decelerating, ascending and descending slopes, turning, normal driving, etc. of the electric drive axle.

### BRIEF DESCRIPTION OF THE DRAWINGS

To describe the technical solutions of the present invention more clearly, the following briefly introduces the accompanying drawings required for description. Apparently, the accompanying drawings in the following description show merely some embodiments of the present invention, and those of ordinary skill in the art may still derive other accompanying drawings from these accompanying drawings without creative efforts.
FIG. 1 is a schematic structural diagram of an oil shield in a specific implementation according to the present invention;
FIG. 2 is a schematic structural diagram of a lubricating structure for a high-speed bearing of an electric drive axle in a specific implementation according to the present invention; and
FIG. 3 is a sectional view along line A-A in FIG. 2.

In the figures: 1. oil shield, 11. crescent soft plate, 12. fitting lip, 13. positioning block, 14. framework, 2. rotating assembly, 21. rotating shaft, 22. gear, 23. high-speed bearing, 24. locking member, 3. bearing seat, 31. oil shield mounting hole, 32. positioning groove, 4. adjusting member.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely some rather than all of the embodiments of the present invention. Based on the embodiments in the present invention, all other embodiments obtained by those of ordinary skill in the art without making creative labor fall within the scope of protection of the present invention.

### Embodiment

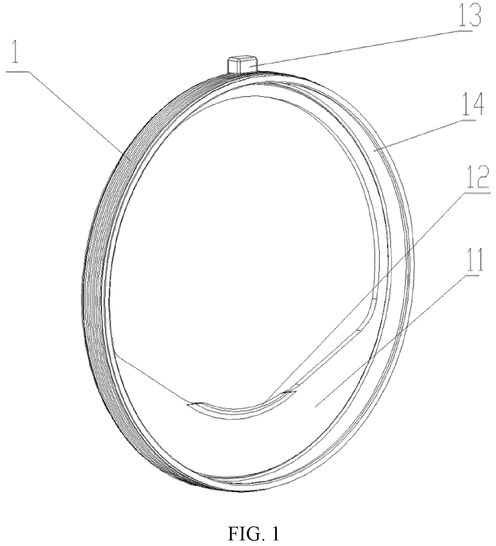

As shown in FIG. 1, the Embodiment 1 provides an oil shield, including an annular framework 14, and preferably, the annular framework 14 is made of a metal material. A crescent soft plate 11 is arranged on an inner circumferential surface of the annular framework 14, preferably, the crescent soft plate 11 is made of a high-temperature resistant rubber material, and an outer circumferential surface of the crescent soft plate 11 is fitted to the inner circumferential surface of the annular framework 14. An inner circumferential surface of the crescent soft plate 11 faces a circle center of the annular framework 14, a fitting lip 12 is arranged in a middle portion of the inner circumferential surface of the crescent soft plate 11, and the fitting lip 12 is arranged opposite to the circle center of the annular framework 14.

In addition, in order to prevent the crescent soft plate 11 from being separated from the annular framework 14, preferably, the annular framework 14 and the crescent soft plate 11 are connected together by adopting a vulcanization and bonding integrated forming process. In order to facilitate the positioning of the whole oil shield 1 and avoid the oil shield 1 from being pressed and deflected during assembly, a positioning block 13 is arranged on the annular framework 14, and preferably, the positioning block 13 is arranged on one side, which is not provided with the crescent soft plate 11, of the annular framework 14.

### Embodiment

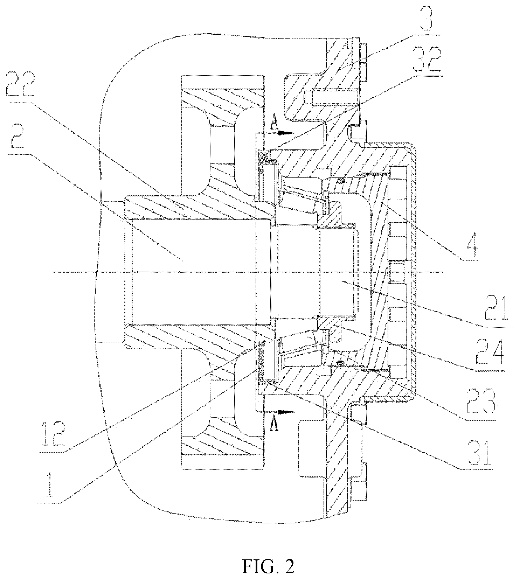

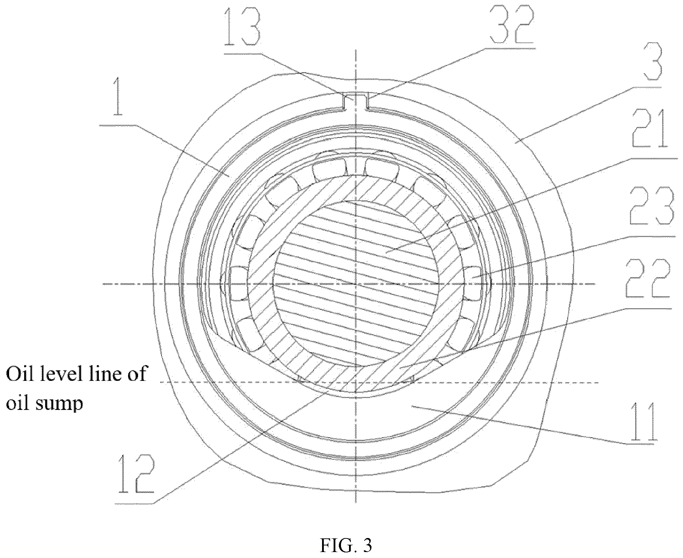

As shown in FIG. 2 and FIG. 3, the Embodiment 2 provides a lubricating structure for a high-speed bearing of an electric drive axle, including a bearing seat 3, where one end of the bearing seat 3 is sequentially provided with an oil shield mounting hole 31 and a bearing mounting cavity from outside to inside, and a step surface is arranged between the oil shield mounting hole 31 and the bearing mounting cavity. A positioning groove 32 is formed in an upper end of the oil shield mounting hole 31, the oil shield 1 according to Embodiment 1 is arranged in the oil shield mounting hole 31, the positioning block 13 of the oil shield 1 is located in the positioning groove 32, and one side of the oil shield 1 is fitted to the step surface of the oil shield mounting hole 31.

The bearing mounting cavity is communicated with a lubricating oil channel, and a high-speed bearing 23 is rotatably mounted in the bearing mounting cavity. A locking member 24 and an adjusting member 4 are arranged on one side, away from the oil shield 1, of the high-speed bearing 23, the locking member 24 is in contact with an inner ring of the high-speed bearing 23, the adjusting member 4 is in contact with an outer ring of the high-speed bearing 23, and the locking member and the adjusting member jointly position and fix the high-speed bearing 23; and a gap exists between the high-speed bearing 23 and the oil shield 1 in an axial direction. A rotating assembly 2 is rotatably connected to the inner ring of the high-speed bearing 23, the rotating assembly 2 penetrates through the oil shield 1, and a lower end of the rotating assembly 2 is fitted to a fitting lip 12 of the oil shield 1.

Specifically, the rotating assembly 2 includes a rotating shaft 21, an end portion of the rotating shaft 21 is rotatably connected to the high-speed bearing 23, and when other rotating members except the high-speed bearing 23 are not arranged at a position, close to the oil shield 1, of the rotating shaft 21, a lower end of the rotating shaft 21 is fitted to the fitting lip 12 of the oil shield 1; and when other rotating members except the high-speed bearing 23 are arranged at a position, close to the oil shield 1, of the rotating shaft 21, a lower end of the rotating member is fitted to the fitting lip 12 of the oil shield 1. For example, when the gear 22 is fixedly connected to a position, close to the oil shield 1, of the rotating shaft 21, the gear 22 is provided with a shaft sleeve portion, and a lower end of the shaft sleeve portion is fitted to the fitting lip 12 of the oil shield 1, so that the oil shield 1, the bearing seat 3 and the adjusting member 4 form a bearing oil sump at the position of the high-speed bearing 23, part of the rollers below the high-speed bearing 23 are always immersed into the lubricating oil, and it is ensured that the high-speed bearing 23 can be fully lubricated all the time.

Moreover, the mounting process of the lubricating structure for a high-speed bearing of an electric drive axle provided by Embodiment 2 is as follows: firstly, the oil shield 1 is mounted on the bearing seat 3, then the rotating assembly 2 penetrates through the oil shield 1, and finally the adjusting member 4 is mounted. In addition, in the penetrating process of the rotating assembly 2, according to the present invention, the rotating assembly 2 can penetrate smoothly through the elastic deformation of the crescent soft plate 11, and meanwhile, since the sufficient gap left between the oil shield 1 and the high-speed bearing 23 in the axial direction, after the rotating assembly 2 is mounted in place, the crescent soft plate 11 can rebound and return, and the fitting lip 12 of the oil shield 1 is fitted to the gear 22 or the rotating shaft 21.

A working principle of the lubricating structure for a high-speed bearing of an electric drive axle provided by Embodiment 2 is as follows: during operation of the rotating assembly 2, an oil level line of the lubricating oil in a main speed reducer body of the electric drive axle is lower than the high-speed bearing 23, and lubricating oil in the main speed reducer body of the electric drive axle can flow into a cavity on the right side of the high-speed bearing 23 shown in FIG. 2 through a lubricating oil channel of the bearing seat 3. However, since the high-speed bearing 23 is a conical bearing, there is a pumping effect, the lubricating oil can be quickly lost from the left side of the high-speed bearing 23 in a high-rotating-speed state, and if oil is not supplied timely or in an initial high-speed starting state, there is a risk of high-temperature ablation caused by lack of lubricating oil in the high-speed bearing 23. According to Embodiment 2, a stable oil sump can be formed on the left side of the high-speed bearing 23 through the oil shield 1, so as to ensure that the high-speed bearing 23 always has sufficient lubricating oil for lubrication under various operating conditions, such as starting, accelerating, decelerating, ascending and descending slopes, turning, normal driving, etc. of the electric drive axle.

The terms "first", "second", "third", "fourth", and so on (if any) in the specification and claims of the present invention and in the above accompanying drawing are intended to distinguish between similar objects but do not necessarily indicate a specific order or sequence. It should be understood that the data used in this way can be interchanged where appropriate so that the embodiments of the present invention described herein may be implemented in an order other than those illustrated or described herein. In addition, the terms "including", "having", or any other variant thereof are intended for covering non-exclusive inclusions.

The above description of the disclosed embodiments enables a person skilled in the art to implement or use the present invention. Various modifications to these embodiments will be readily apparent to a person skilled in the art, and the generic principles defined herein may be implemented in other embodiments without departing from the spirit or scope of the present invention. Therefore, the present invention is not intended to be limited to the embodiments shown herein, but is to be in accordance with the widest scope consistent with the principles and novel features disclosed herein.

## Claims

1. An oil shield, **characterized by** comprising an annular framework, wherein a crescent soft plate is arranged on an inner circumferential surface of the annular framework, an outer circumferential surface of the crescent soft plate is fitted to the inner circumferential surface of the annular framework, an inner circumferential surface of the crescent soft plate faces a circle center of the annular framework, a fitting lip is arranged in a middle portion of the inner circumferential surface of the crescent soft plate, and the fitting lip is arranged opposite to the circle center of the annular framework.

2. The oil shield according to claim 1, **characterized in that** the crescent soft plate is made of a high-temperature resistant rubber material.

3. The oil shield according to claim 2, **characterized in that** the annular framework and the crescent soft plate are integrally formed by vulcanization and bonding.

4. A lubricating structure for a high-speed bearing of an electric drive axle, **characterized by** comprising a bearing seat, wherein one end of the bearing seat is sequentially provided with an oil shield mounting hole and a bearing mounting cavity from outside to inside, a step surface is arranged between the oil shield mounting hole and the bearing mounting cavity, the oil shield according to any one of claims 1 to 3 is arranged in the oil shield mounting hole, and one side of the oil shield is fitted to the step surface of the oil shield mounting hole; and the bearing mounting cavity is communicated with a lubricating oil channel, a high-speed bearing is rotatably mounted in the bearing mounting cavity, a rotating assembly is rotatably connected to the high-speed bearing, the rotating assembly penetrates through the oil shield, and a lower end of the rotating assembly is fitted to a fitting lip of the oil shield.

5. The lubricating structure for a high-speed bearing of an electric drive axle according to claim 4, **characterized in that** the rotating assembly comprises a rotating shaft, an end portion of the rotating shaft is rotatably connected to the high-speed bearing, and a lower end of the rotating shaft is fitted to the fitting lip of the oil shield.

6. The lubricating structure for a high-speed bearing of an electric drive axle according to claim 4, **characterized in that** the rotating assembly comprises a rotating shaft and a gear, an end portion of the rotating shaft is rotatably connected to the high-speed bearing, the gear is fixedly connected to the rotating shaft, the gear is provided with a shaft sleeve portion, and a lower end of the shaft sleeve portion is fitted to the fitting lip of the oil shield.

7. The lubricating structure for a high-speed bearing of an electric drive axle according to claim 4, 5, or 6, **characterized in that** a gap exists between the oil shield and the high-speed bearing in an axial direction.

8. The lubricating structure for a high-speed bearing of an electric drive axle according to claim 5, **characterized in that** the oil shield is provided with a positioning block, the bearing seat is provided with a positioning groove, and the positioning groove is matched with the positioning block.

9. The lubricating structure for a high-speed bearing of an electric drive axle according to claim 5, **characterized in that** a locking member and an adjusting member are arranged on one side, away from the oil shield, of the high-speed bearing, the locking member is in contact with an inner ring of the high-speed bearing, and the adjusting member is in contact with an outer ring of the high-speed bearing.
